# EUROPÄISCHE PATENTSCHRIFT

(11) **EP 2 504 170 B1**
(45) Veröffentlichungstag und Bekanntmachung des Hinweises auf die Patenterteilung: **30.04.2014**
(21) Anmeldenummer: 10773007.9
(22) Anmeldetag: 14.10.2010
(51) Int. Cl.: B41F 13/28, B41F 13/36, B41F 13/38, F16C 23/10

(54) **EXZENTERVERSTELLUNG AN LAGERN VON DRUCKMASCHINEN**
ECCENTRIC ADJUSTMENT ON BEARINGS OF PRINTING PRESSES
RÉGLAGE EXCENTRIQUE SUR PALIERS DE MACHINES D'IMPRESSION

(30) Priorität: 24.11.2009 DE 102009055655
(43) Veröffentlichungstag der Anmeldung: 03.10.2012
(73) Patentinhaber: Schaeffler Technologies GmbH & Co. KG, 91074 Herzogenaurach (DE)
(72) Erfinder: DITTENHÖFER, Thomas, 97519 Humprechtshausen (DE); HAASLER, Markus, 01662 Meißen (DE); FRÜHWALD, Andreas, 91460 Baudenbach (DE)
(86) Internationale Anmeldenummer: PCT/EP2010/065405
(87) Internationale Veröffentlichungsnummer: WO 2011/064042

(56) Entgegenhaltungen:
- EP-A1- 0 591 792
- DE-A1- 10 129 762
- DE-A1- 19 833 113
- US-A1- 2004 083 911
- Matthias Balázs: "Analyse und Modellbildung einer Planeten-Wälz-Gewindespindel", Technische Universität München , 12. Dezember 2000 (2000-12-12), XP002617317, Gefunden im Internet: URL:http://deposit.ddb.de/cgi-bin/dokserv? idn=960402152 [gefunden am 2011-01-19]

## Beschreibung

### Gebiet der Erfindung

Die Erfindung bezieht sich auf eine Zapfenwälzlagerung, bei der Wälzkörper auf einem Zapfen eines Zylinders einer Druckmaschine, direkt oder unter Zwischenschaltung eines Innenringes auf diesem festgelegt sind, wobei die Wälzkörper weiterhin mit einem zylindrischen, an einer Maschinenseitenwand festlegbaren oder mit einem exzentrischen, verdrehbaren Außenring direkt oder unter Zwischenschaltung eines ebenfalls wälzgelagerten und exzentrisch ausgeführten Zwischenringes mit oder ohne Einfügung von Lageraußenringen in Wirkverbindung stehen, wobei am verdrehbaren Außenring und/oder am Zwischenring ein Hebelarm befestigt ist, an dessen freiem Ende ein maschinenfest abgestütztes Verstellmittel angreift und wobei das Verstellmittel als Spindelaktuator ausgebildet ist, dessen Spindelmutter oder Spindel axial abgestützt ist und mit einem Motor in Drehverbindung steht

### Hintergrund der Erfindung

Eine derartige Zapfenwälzlagerung ist aus der EP 0 591 792 A1 bekannt. Dabei sind die Innen- und die Außenflächen von Außenringen exzentrisch zueinander ausgeführt, sodass eine Verdrehung derselben zu einer Verlagerung eines in den Außenringen gelagerten Zylinders führt. An den Außenringen sind Hebel befestigt, deren freie Enden mittels Stangen mit Armen einer Koppelwelle ver-bunden sind. Die Koppelwelle weist einen Hebelarm auf, an dem eine Gewindestange angreift, die mit einer von einem Motor angetriebenen, axial festgelegten Mutter beherrscht ist. Eine Verschiebung der Gewindespindel durch den Motor und die Mutter führt daher zu Verlagerung des Zylinders.
Die exakte Verlagerung des Zylinders ist bei dieser Ausgestaltung allerdings schwierig, da das Übersetzungsverhältnis zwischen Motor und Schwenkbewegung des Außenringes begrenzt ist.
Um dieses Problem zu lösen ist in der US 2004/0083911 A1 ein Zwischengetriebe vorgesehen, das allerdings bauaufwändig ist.
Eine weitere Zapfenwälzlagerung ist aus der DE 3 324 811 A1 bekannt. Bei dieser Zapfenwälzlagerung ist sowohl ein exzentrisch ausgeführter Zwischenring als auch ein exzentrisch verdrehbar gelagerter Außenring vorgesehen, wobei sowohl an dem Außenring als auch an dem Zwischenring je ein Hebelarm befestigt ist, an dessen Ende Verstellmittel angreifen. Diese Verstellmittel sind in dem angesprochenen Dokument nicht näher ausgeführt.

Es ist allgemein bekannt, die Verstellung mittels eines Pneumatikzylinders vorzunehmen, der mit einem maschinenfesten Anlenkpunkt und dem Hebelarm in Wirkverbindung steht. Die Ausführung mit Pneumatikzylinder ist platzintensiv und mit relativ hohem Montageaufwand verbunden. Die Verstellkraft variiert aufgrund der unterschiedlich wirkenden Hebelverhältnisse, was als ungünstig angesehen wird. Zudem ist die Verstellkraft begrenzt auf den System-Maschinendruck der Druckmaschine und auf die gewählte Übersetzung.

### Aufgabe der Erfindung

Aufgabe der Erfindung ist es daher, eine Zapfenwälzlagerung so zu verbessern, dass die Verstellbewegungen einfach, robust, kostengünstig und platzsowie energiesparend ausgeführt und unabhängig von der Übersetzung sind. Es soll eine schnelle Drehbewegung des Motors in eine langsame Verlagerungsbewegung des Zylinders zur Verfügung gestellt werden.

### Beschreibung der Erfindung

Die Aufgabe der Erfindung wird dadurch gelöst, dass der Spindelaktuator eine Planeten-Wälz-Gewindespindel aufweist, in dessen Rotor die Gewindemutter integriert ist. Dieser besondere Spindelaktuator zeichnet sich durch seine hohe Kompaktheit aus. Es können schnelle Drehbewegungen in langsame Hubbewegungen umgesetzt werden, wodurch eine besonders genaue Verstellung möglich ist. Das Übersetzungsverhältnis wird dabei bestimmt durch die Steigung der Spindel und die Wälzkreisdurchmesser der Spindel, der Mutter und der Planeten. Dadurch sind bei sehr kleinen Gesamtsteigungen sehr hohe Axialkräfte erreichbar, so dass sich sämtliche Verstellbewegungen der Zylinder an Druckmaschinen sehr einfach und kostengünstig mit diesem Spindelaktuator lösen lassen. Mittels durchgehender Spindel durch die Mutter und ggf. das Gehäuse lassen sich verschieden große Verstellwege konstruktiv sehr einfach lösen.
Je nach Energieangebot im Bereich der Druckmaschine kann ein Hydraulikmotor oder ein Druckluftmotor zum Antrieb der Gewindemutter der Planeten-Wälz-Gewindespindel vorgesehen werden. Am einfachsten ist dabei allerdings ein Elektromotor, weil dieser klein baut und mit oder an der Spindelmutter oder der Spindel zusammengebaut werden kann. Planeten-Wälz-Gewindespindeln sind durch eine Dissertation "Analyse und Modellbildung einer Planeten-Wälz-Gewindespindel" von Dipl.-Ing Matthias Balázs durch die Technische Universität München bekannt, Sie werden dort allerdings für die Bewegungsabläufe von Greifern, Greifhänden und elektromechanisch betätigten Bremsen von Kraftfahrzeugen, also auf weit von Druckmaschinen entfernten Fachgebieten vorgeschlagen.
Das Verstellmittel kann natürlich auch ein Koppelgetriebe aufweisen, dessen Festachse an einer Maschinenseitenwand abgestützt ist, da das Koppelgetriebe an sich wenig Bauraum benötigt, dafür aber eine gute Übersetzungs- oder Untersetzungsmöglichkeit zur Verfügung stellt.

Je nach Ausgestaltung und Bauraum der Druckmaschine wird vorgeschlagen, dass das Gehäuse der darin drehbar gelagerten Spindelmutter an einem feststehenden Teil der Zapfenwälzlagerung, zum Beispiel an einem feststehenden Außenring oder an der Maschinenseitenwand abgestützt und die Spindel drehfest mit dem Hebelarm oder dem Koppelgetriebe verbunden ist. Das hat den Vorteil, dass das etwas größere Gehäuse mit Spindelmutter und Motor etwas abseits von der Zapfenwälzlagerung angebracht werden kann.

Alternativ dazu wird vorgeschlagen, dass die Spindelmutter drehfest mit dem Hebelarm oder dem Koppelgetriebe verbunden ist und die Spindel drehbar in einem Spindelgehäuse geführt ist, das an einem feststehenden Teil der Zapfenwälzlagerung oder an der Maschinenseitenwand abgestützt ist.

### Kurze Beschreibung der Zeichnungen

Zur weiteren Erläuterung der Erfindung wird auf die anhängenden Zeichnungen verwiesen, in denen Ausführungsbeispiele der Erfindung vereinfacht dargestellt sind. Dabei zeigen:
- Figur 1: eine perspektivische Ansicht einer Zapfenwälzlagerung mit Befestigung des Gehäuses einer Spindelmutter an einem Festteil des Zapfenwälzlagers,
- Figur 2: eine Seitenansicht einer Zapfenwälzlagerung gemäß Figur 1 mit Schnitt durch eine Antriebseinheit mit Spindelmutter Lagerung und Motor,
- Figur 3: eine Seitenansicht einer Zapfenwälzlagerung ähnlich Figur 2 mit einem zwischengeschalteten Koppelgetriebe,
- Figur 4: eine Seitenansicht einer Zapfenwälzlagerung ähnlich Figur 2, bei der die Spindelmutter am Hebelarm der Verstellung angeordnet ist und die Spindel von einem Motor angetrieben wird, der an einem feststehenden Teil der Zapfenwälzlagerung oder an der Maschinenseitenwand abgestützt ist, und
- Figur 5: einen Schnitt durch eine Planeten-Wälz-Gewindespindel.

### Ausführliche Beschreibung der Zeichnungen

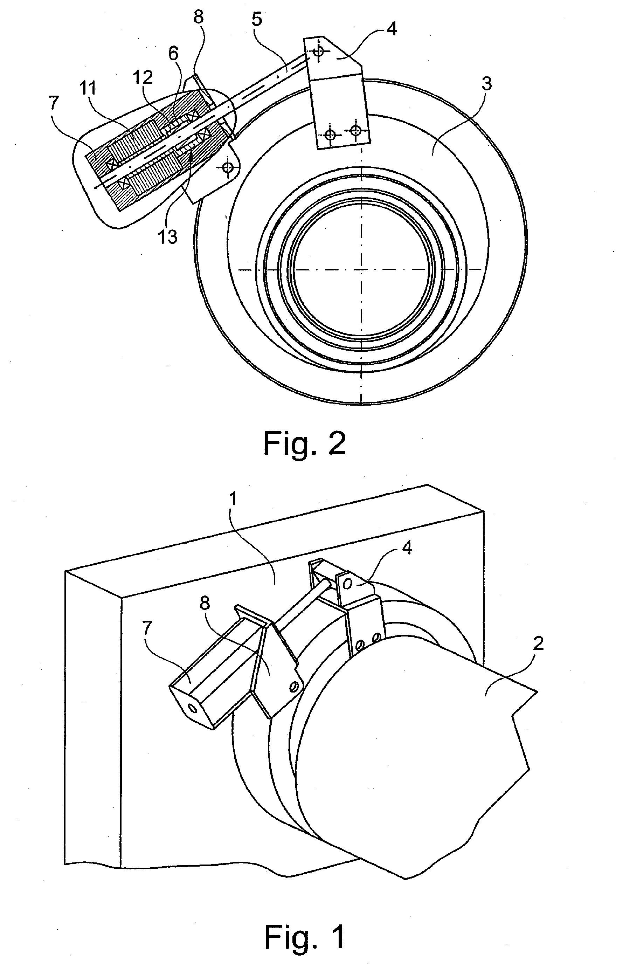

In den Figuren 1 bis 5 ist, soweit im Einzelnen dargestellt, mit 1 eine Maschinenseitenwand bezeichnet, an der sich ein Zylinder 2 einer Druckmaschine unter Zwischenschaltung der Zapfenwälzlagerung abstützt. Wie in den Figuren 1 bis 4 dargestellt, weist die Zapfenwälzlagerung einen verdrehbaren und exzentrisch ausgebildeten Zwischenring 3 auf, an dem ein Hebelarm 4 befestigt ist. An dem Hebelarm 4 greift drehbar, aber verschwenkbar, in den Figuren 1 und 2 eine Spindel 5 an, die mit einer Spindelmutter 6 in Wirkverbindung steht, wobei die Spindelmutter 6 drehbar in einem Gehäuse 7 gelagert ist, das mittels einer Stütze 8 an einem feststehenden Teil der Zapfenwälzlagerung befestigt ist.

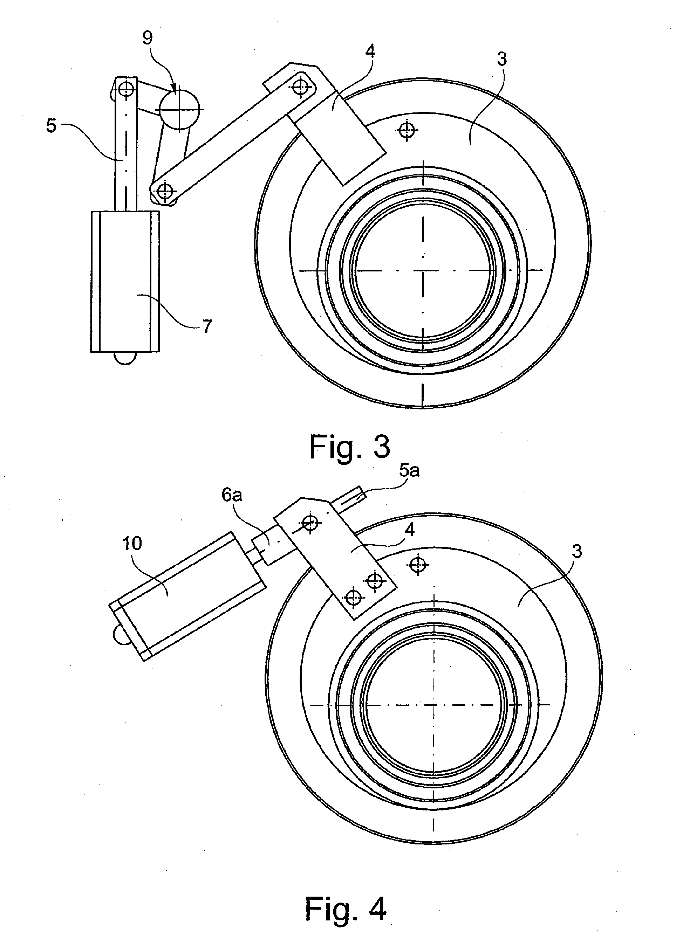

In Figur 3 greift an dem Hebelarm 4 ein Koppelgetriebe 9 an, an dessen freiem Ende die Spindel 5 angreift, welche in einem Gehäuse 7 gelagert ist. Das Gehäuse 7 ist nicht näher dargestellt an der Maschinenseitenwand 1 befestigt. In Figur 4 ist an dem Hebelarm 4 schwenkbar eine Spindelmutter 6a befestigt, wobei eine Spindel 5a in ein Spindelgehäuse 10 ragt, in dem ein Motor angeordnet ist, der mit der Spindel 5a in Drehverbindung steht. Das Spindelgehäuse 10 ist seinerseits, nicht näher dargestellt, an der Maschinenseitenwand befestigt.

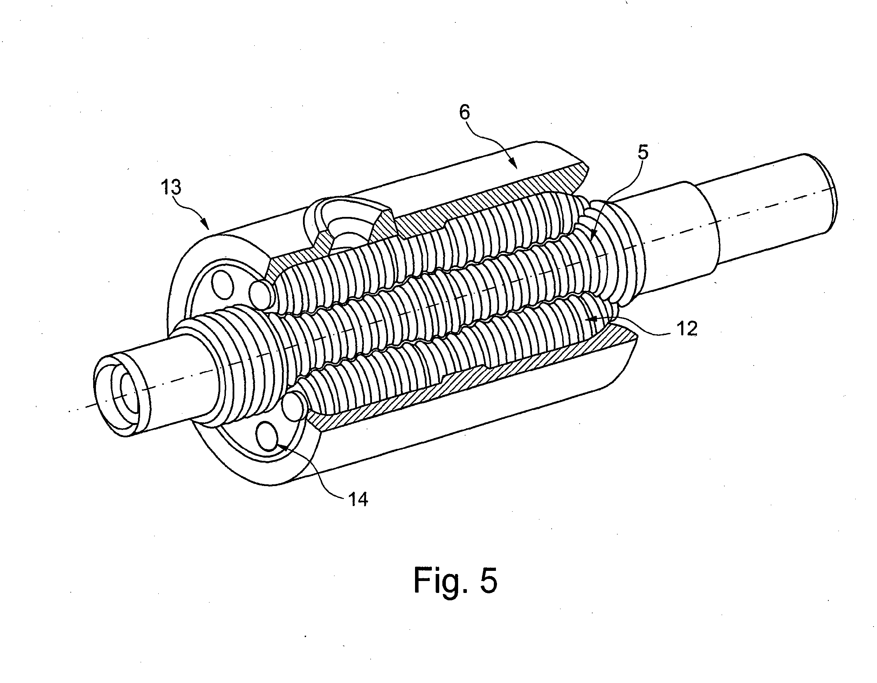

Wie in Figur 2 näher dargestellt ist, ist in dem Gehäuse 7 die Spindelmutter 6 drehbar, aber axial fest, gelagert und mit einem integrierten Elektromotor 11 drehverbunden. Der Kraftfluss erfolgt über die Spindelmutter 6 die Planeten 12, die Bestandteil einer Planeten-Wälz-Gewindespindel 13 sind, auf die Spindel 5. Die Planeten-Wälz-Gewindespindel 13 ist in Figur 5 im vergrößerten Maßstab dargestellt.

In Figur 5 ist weiterhin ersichtlich, dass die Planeten 12 an ihren Enden Zapfen aufweisen, die in Führungsringen 14 angeordnet sind.

### Bezugszahlenliste

- 1: Maschinenseitenwand
- 2: Zylinder
- 3: Zwischenring
- 4: Hebelarm
- 5, 5a: Spindel
- 6, 6a: Spindelmutter
- 7: Gehäuse
- 8: Stütze
- 9: Koppelgetriebe
- 10: Spindelgehäuse
- 11: Elektromotor
- 12: Planeten
- 13: Planeten-Wälz-Gewindespindel
- 14: Führungsring

## Patentansprüche

1. Zapfenwälzlagerung, bei der Wälzkörper auf einem Zapfen eines Zylinders einer Druckmaschine, direkt oder unter Zwischenschaltung eines Innenringes auf diesem festgelegt sind, wobei die Wälzkörper weiterhin mit einem zylindrischen, an einer Maschinenseitenwand festlegbaren oder mit einem exzentrischen, verdrehbaren Außenring direkt oder unter Zwischenschaltung eines ebenfalls wälzgelagerten und exzentrisch ausgeführten Zwischenringes (3) mit oder ohne Einfügung von Lageraußenringen in Wirkverbindung stehen, wobei am verdrehbaren Außenring und/oder am Zwischenring (3) ein Hebelarm (4) befestigt ist, an dessen freiem Ende ein maschinenfest abgestütztes Verstellmittel angreift und wobei das Verstellmittel als Spindelaktuator ausgebildet ist, dessen Spindelmutter (6) oder Spindel (5) axial abgestützt ist und mit einem Motor in Drehverbindung steht, **dadurch gekennzeichnet, dass** der Spindelaktuator eine Planeten-Wälz-Gewindespindel (13) aufweist, dessen Rotor als Gewindemutter (6) ausgebildet ist.

2. Zapfenwälzlagerung nach Anspruch 1, **dadurch gekennzeichnet, dass** das Verstellmittel ein Koppelgetriebe (9) aufweist, dessen Festachse an einer Maschinenseitenwand (1) abgestützt ist.

3. Zapfenwälzlagerung nach einem der Ansprüche 1 bis 2, **dadurch gekennzeichnet, dass** das Gehäuse (7) der darin drehbar gelagerten Spindelmutter (6) an einem feststehenden Teil der Zapfenwälzlagerung oder an der Maschinenseitenwand (1) abgestützt und die Spindel (5) drehfest mit dem Hebelarm (4) oder dem Koppelgetriebe (9) verbunden ist.

4. Zapfenwälzlagerung nach einem der Ansprüche 1 bis 3, **dadurch gekennzeichnet, dass** die Spindelmutter (6a) drehfest mit dem Hebelarm (4) oder dem Koppelgetriebe (9) verbunden ist und die Spindel (5a) von dem Motor angetrieben in einem Spindelgehäuse (10) geführt ist, das an einem feststehenden Teil der Zapfenwälzlagerung oder an der Maschinenseitenwand (1) abgestützt ist.

## Claims

1. Anti-friction journal bearing, in which rolling bodies are fixed on a journal of a cylinder of a printing press, directly or with an inner ring being connected in between on said journal, the rolling bodies being operatively connected, furthermore, to a cylindrical outer ring which can be fixed on a press side wall or to an eccentric, rotatable outer ring, directly or with a likewise roller-mounted and eccentrically configured intermediate ring (3) being connected in between, with or without the insertion of bearing outer rings, a lever arm (4) being fastened to the rotatable outer ring and/or to the intermediate ring (3), on the free end of which lever arm (4) an adjusting means acts which is supported in a fixed manner on the press, and the adjusting means being configured as a spindle actuator, the spindle nut (6) or spindle (5) of which is supported axially and is rotationally connected to a motor, **characterized in that** the spindle actuator has a planetary roller spindle drive (13), the rotor of which is configured as a threaded nut (6).

2. Anti-friction journal bearing according to Claim 1, **characterized in that** the adjusting means has a coupler mechanism (9), the fixed axle of which is supported on a press side wall (1).

3. Anti-friction journal bearing according to either of Claims 1 and 2, **characterized in that** the housing (7) of the spindle nut (6) which is mounted rotatably therein is supported on a stationary part of the anti-friction journal bearing or on the press side wall (1), and the spindle (5) is connected fixedly to the lever arm (4) or the coupler mechanism (9) so as to rotate with it.

4. Anti-friction journal bearing according to one of Claims 1 to 3, **characterized in that** the spindle nut (6a) is connected fixedly to the lever arm (4) or the coupler mechanism (9) so as to rotate with it, and the spindle (5a) is guided in a manner which is driven by the motor in a spindle housing (10) which is supported on a stationary part of the anti-friction journal bearing or on the press side wall (1).

## Revendications

1. Support sur palier à roulement pour tourillon, dans lequel des corps de roulement sont fixés sur un tourillon d'un cylindre d'une machine d'impression, directement ou par interposition d'une bague interne sur celui-ci, les corps de roulement étant en liaison fonctionnelle en outre avec une bague extérieure cylindrique pouvant être fixée à une paroi latérale de la machine ou avec une bague extérieure excentrique rotative, directement ou par interposition d'une bague intermédiaire (3) également supportée sur palier à roulement et réalisée de manière excentrique avec ou sans l'insertion de bagues extérieures de palier, un bras de levier (4) étant fixé à la bague extérieure rotative et/ou à la bague intermédiaire (3), à l'extrémité libre duquel vient en prise un moyen de réglage supporté de manière fixée à la machine et le moyen de réglage étant réalisé sous forme d'actionneur à broche dont l'écrou de broche (6) ou la broche (5) est supporté(e) axialement et est en liaison rotative avec un moteur, **caractérisé en ce que** l'actionneur à broche présente une broche filetée à roulement planétaire (13), dont le rotor est réalisé sous forme d'écrou fileté (6).

2. Support sur palier à roulement pour tourillon selon la revendication 1, **caractérisé en ce que** le moyen de réglage présente un mécanisme d'accouplement (9) dont l'axe fixe est supporté sur une paroi latérale de la machine (1).

3. Support sur palier à roulement pour tourillon selon l'une quelconque des revendications 1 à 2, **caractérisé en ce que** le boîtier (7) de l'écrou de broche (6) monté de manière rotative à l'intérieur de celui-ci est supporté au niveau d'une partie fixe du support sur palier à roulement pour tourillon ou au niveau de la paroi latérale de la machine (1), et la broche (5) est connectée de manière solidaire en rotation au bras de levier (4) ou au mécanisme d'accouplement (9).

4. Support sur palier à roulement pour tourillon selon l'une quelconque des revendications 1 à 3, **caractérisé en ce que** l'écrou de broche (6a) est connecté de manière solidaire en rotation au bras de levier (4) ou au mécanisme d'accouplement (9) et la broche (5a) est guidée de manière entraînée par le moteur dans un boîtier de broche (10) qui est supporté au niveau d'une partie fixe du support sur palier à roulement pour tourillon ou au niveau de la paroi latérale de la machine (1).
